# EUROPEAN PATENT SPECIFICATION

(11) **EP 1 250 221 B1**
(45) Date of publication and mention of the grant of the patent: **23.06.2004**
(21) Application number: 00981338.7
(22) Date of filing: 05.12.2000
(51) Int. Cl.: B29C 47/20, B29C 47/70

(54) **EXTRUSION DIE FOR BLOW MOULDING**
EXTRUSIONSDÜSE ZUM BLASFORMEN
MATRICE A EXTRUSION POUR MOULAGE PAR SOUFFLAGE

(30) Priority: 17.01.2000 IT MI200037
(43) Date of publication of application: 23.10.2002
(73) Proprietor: S.T. Soffiaggio Tecnica S.r.l., I-20052 Monza (MI) (IT)
(72) Inventor: TIETTO, Mario, I-20092 Cinisello Balsamo (IT)
(74) Representative: Forattini, Amelia
(86) International application number: PCT/EP2000/012211
(87) International publication number: WO 2001/053061

(56) References cited:
- DE-A- 3 026 822
- DE-C- 19 757 030
- US-A- 4 565 515
- PATENT ABSTRACTS OF JAPAN vol. 014, no. 501 (M-1043), 2 November 1990 (1990-11-02) -& JP 02 206527 A (PLACO CO LTD), 16 August 1990 (1990-08-16) -& DATABASE WPI Derwent Publications Ltd., London, GB; AN 1990-294014 XP002166464

## Description

### Technical field.

The present invention relates to a device and a method for extruding and blow-molding thermoplastic tubular components by means of an extrusion head.

### Background art.

Devices of this kind are known for example from US Patents No. 3,801,254 and No. 4,565,515. According to these documents, an extrusion head is fed, so as to divide into two parts a stream of melted thermoplastic material and form two mutually concentric tubular components which are meant to be blow-molded. This kind of device, however, is very complicated to manufacture, particularly in the machining of the channels that form the two concentric tubular components. Furthermore, there are practically insoluble problems as regards changing color or material. Every time it is necessary to change the type of material or the color, the machine must in fact be made to run empty for very long periods simply in order to clean it from the residues of the old material with the old coloring. Furthermore, there are some materials, such as polycarbonate, which during cooling tend to adhere to the steel walls of the channels of the head, often damaging the surface of the channels in contact with the material. The surfaces are also difficult or impossible to maintain. Moreover, polycarbonate tends to break down with prolonged use, releasing broken-down particles in the final product and damaging the quality of the extruded material. These problems cannot be solved, since it is not possible to clean the head in all its critical surfaces. Furthermore, each thermoplastic material has different rheological characteristics and accordingly one should be able to vary the dimensions of the passage channels according to the specific material used. In practice, the head is merely a compromise among the characteristics of the various thermoplastic materials with which it may be used, but cannot yield optimum results except with some thermoplastic materials having intermediate characteristics.

In order to overcome these problems, Graham Engineering has developed an extrusion head which can be partially cleaned, because it has a spiral groove which can be raised with respect to the outer cylindrical container so as to allow access to the region during maintenance or cleaning. However, even in this case it is not possible to adapt the shape of the head (the region provided with the spiral groove is not easily replaceable) to the particular thermoplastic material to be extruded.

Likewise, DE-9757030 teaches to raise the upper part of the head, where the channels for distributing the plastic material are present, so as to allow cleaning of the outer cardioid. In this case, the effect of the cleaning action is even smaller, because it is impossible to clean the internal cardioid, which remains full of material. Accordingly, the problem is not solved, because it is still necessary to make the machine run empty for a long time in order to eliminate the material from the internal cardioid. Finally, even in this case it is not possible to adapt the head to the various different types of thermoplastic material to be processed. In this case also, the parts to be replaced, in case of damage to the passage surfaces of the thermoplastic resin, are extremely expensive, since they have to be machined for cylindrical mating with very small tolerances and by using extremely expensive machine tools.

There is also a conventional method which uses a so-called spider ring which has a plurality of staggered openings and a central feed of the melted thermoplastic material. This solution has the drawback that the various sectors that form the tubular component never bond perfectly and the head is subject to stagnation of material in the lower part at the outlet of the channels from the spider ring. It is also a very delicate head, because the metal parts that separate the channels must, in order to avoid stagnation, be as thin as possible and therefore weaken the structural capacity to support the internal core of the head.

### Disclosure of the invention.

The aim of the present invention is to overcome the above drawbacks with a device for extruding, and subsequently blow-molding, thermoplastic tubular components according to claim 1.

### Brief description of the drawings.

The invention will become apparent with reference to three preferred embodiments of the invention, illustrated only by way of non-limitative example in the accompanying drawings, wherein:
Figure 1 is a partially sectional view of the device according to the invention;
Figure 2 is a partially sectional side view of the device of Figure 1, shown partly disassembled and with the stem extracted downward;
Figure 3 is a sectional view, taken along the plane III-III of Figures 10 and 11, of a second embodiment of the device according to the invention;
Figure 4 is a sectional view, taken along the plane IV-IV of Figures 8 and 9, of the device of Figure 1;
Figure 5 is a sectional view, taken along the plane V-V, of a third embodiment of the device according to the invention;
Figure 6 is a sectional plan view, taken along the plane VI-VI of Figure 5;
Figure 7 is a sectional plan view, taken along the plane VI-VI, of the device of Figure 5;
Figure 8 is a sectional plan view, taken along the plane VIII-VIII, of the device of Figure 4;
Figure 9 is a sectional plan view, taken along the plane IX-IX, of the device of Figure 4;
Figure 10 is a sectional plan view, taken along the plane X-X, of the device of Figure 3; and
Figure 11 is a sectional plan view, taken along the plane XI-XI, of the device of Figure 3.

### Ways of carrying out the invention.

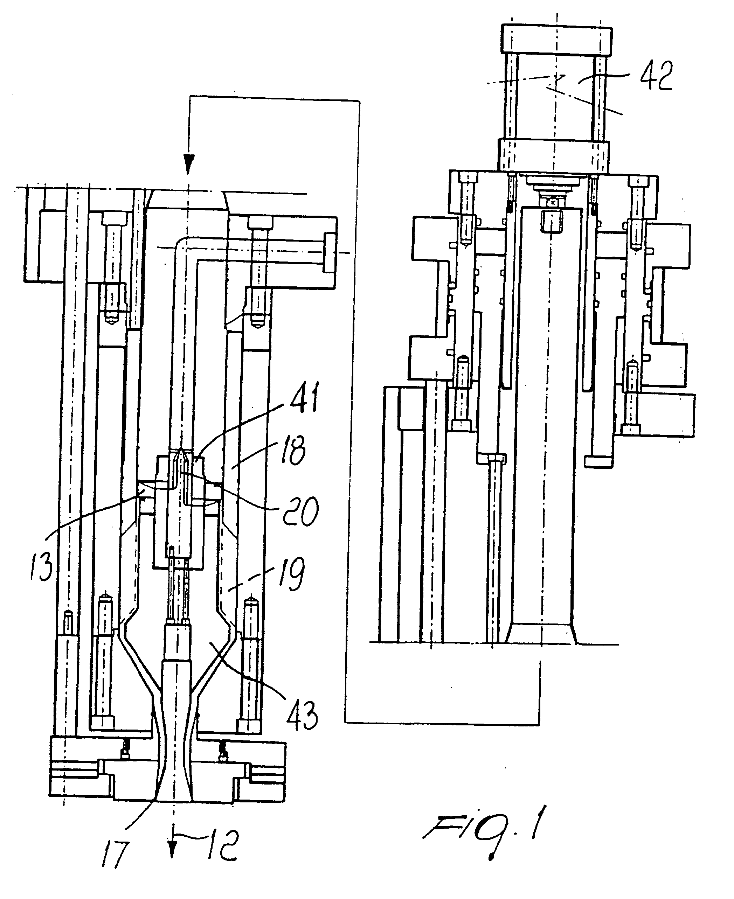

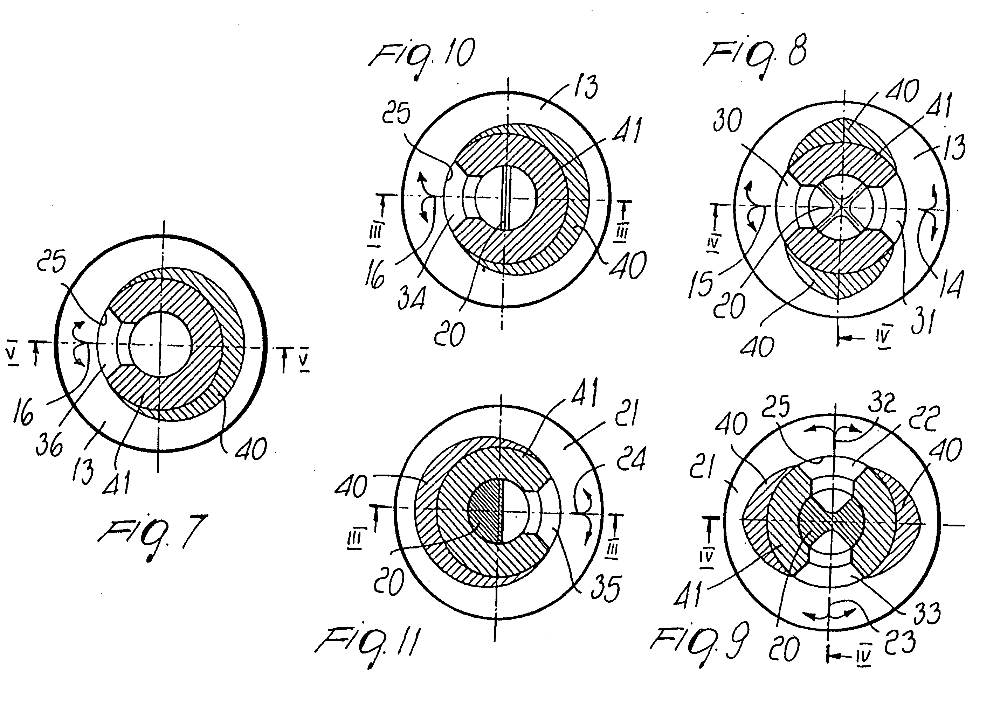

With reference to Figures 1 to 11, a device is illustrated for extruding and blow-molding thermoplastic tubular components by means of an extrusion head, shown in the figures, which comprises a central stem 10, 41, with the hole 11 formed in the direction of the outward movement 12 of the extruded tubular component. In practice, the hole 11 is coaxial to the stem 10, 41. The hole 11 thus forms a central inlet for the single stream of melted thermoplastic material. The expression "single stream" is used to designate the stream which has not yet been divided into a plurality of streams. Preferably, the central stem 10, 41 is divided into two parts, namely an upper part 10 and a lower part 41, so that the lower part 41 can be removable from the upper part 10 and can be replaced with another part of a different type. In the illustrated embodiments, the lower part 41 of the stem can be removed from the upper part simply by unscrewing it from the upper thread.

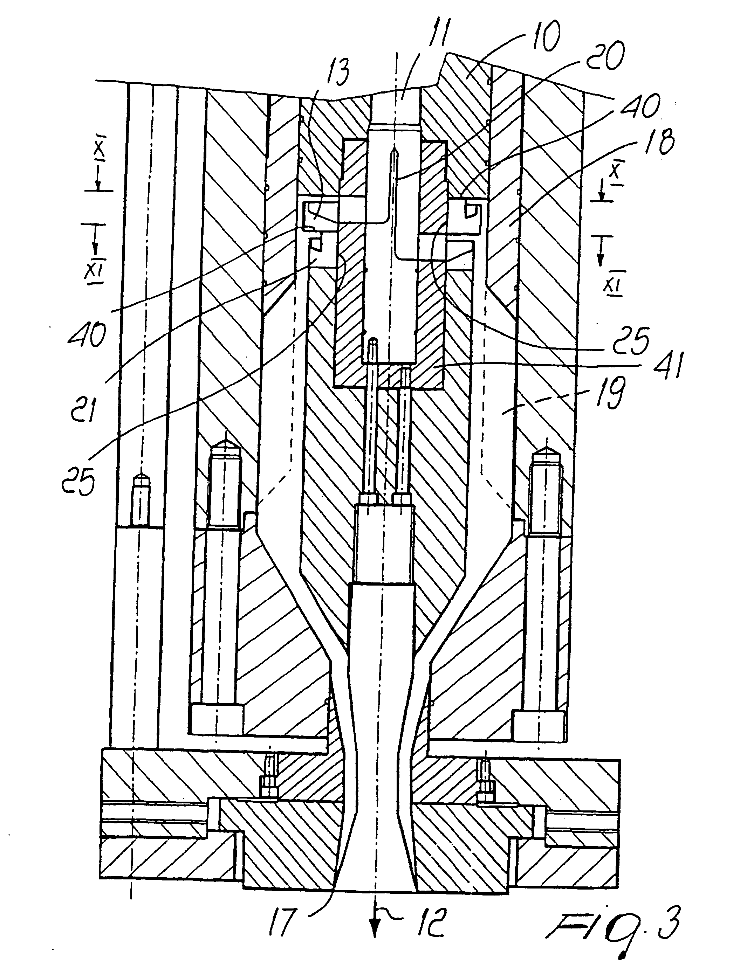

The distribution body 13 lies radially with respect to the lower part of the central stem 41, so as to radially distribute the stream of thermoplastic material until it is distributed along the entire circumference of the distribution body 13, so as to form a tubular component. According to the first embodiment, with particular reference to Figure 8, the stream of material is divided by the distribution body 13 into two channels 14 and 15 which widen and move apart, along the radius of the central stem 41 until they reach the circumference of the distribution body 13, through 180° for each channel. With reference to the second and third embodiments, shown in particular in Figures 3, 5, 6, and 7 to 10, the distribution body 13 has a single channel 16 which widens along the radius, moving away from the central stem 41, until it reaches, at the circumference of the distribution body 13, an extension of 360°.

In general, according to all of the embodiments of the invention, a tubular component is formed around the circumference of the distribution body 13 and is then extruded by means of an annular extrusion port 17 in order to form the final tubular component, which exits in the direction indicated by the arrow 12.

In order to accelerate the exit of the tubular component, a piston 18 is used which, when it is necessary to extrude the tubular component, reaches the position 19 shown in dashed lines.

According to the first and second embodiments, a stream divider is provided between the central hole 11 and the distribution body 13. In this case there is at least one second distribution body 21. In this manner, the stream divider 20 can divide the single stream into two parts, i.e., toward the distribution body 13 and the second distribution body 21, so that the two distribution bodies are fed separately. In this case, the two distribution bodies are arranged in succession in the direction of the outward motion 12 of the extruded tubular component. The stream divider 20 is orientated along the outward direction 12 of the extruded tubular component.

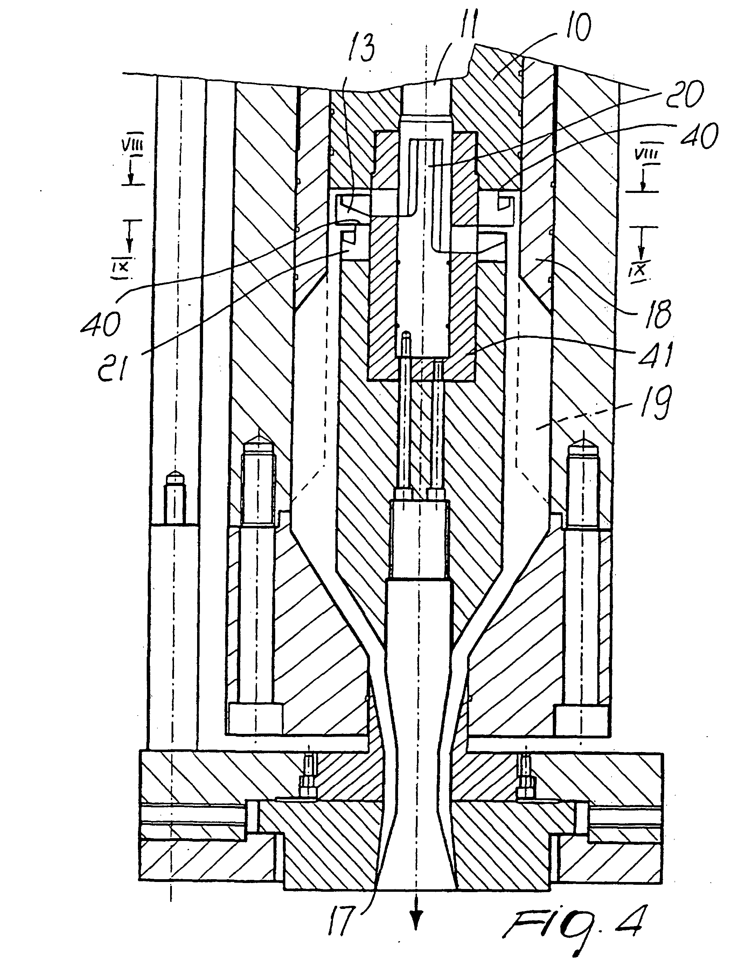

With particular reference to the first embodiment, shown in particular in Figures 4, 8 and 9, the stream divider 20 has four dividing channels in order to divide the single stream into four parts and thus feed two separate distribution bodies, the distribution body 12 and the distribution body 21, each of which has two distribution channels 14, 15 for the first distribution body and 23, 32 for the second distribution body. In this manner, the two concentric tubular components prepared by the first and second distribution bodies 13 and 21 have seams which are staggered by 90° with respect to each other, so as to ensure maximum mechanical strength of the finished tubular component.

With particular reference to the second embodiment, shown in particular in Figures 3, 10 and 11, the stream divider has two channels; in particular, one feeds the channel 16 of the first distribution body 13 and the other one feeds the channel 24 of the second distribution body 21. The two channels form two concentric tubular components, in which the seam of the two tubular components is staggered by 180° with respect to each other in order to improve mechanical strength.

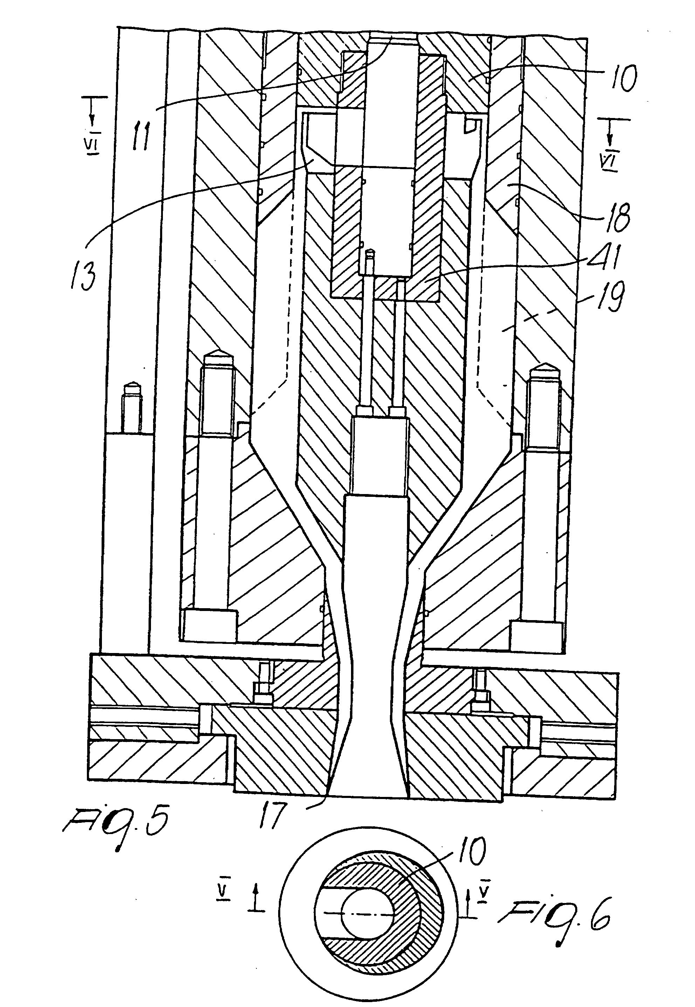

With reference to the third embodiment, shown with particular reference to Figures 5 and 7, a single distribution body 13 is used which has a single channel 16 and a single seam at the side that lies opposite the entry side of the channel 16.

In these three embodiments, greater complexity of the first embodiment is matched by a better quality of the extruded tubular component, intermediate complexity is matched by intermediate quality for the second embodiment, and maximum simplicity is matched by lower quality for the third embodiment: in practice, the third embodiment can be suitable for thermoplastic materials that are easy to extrude and have low viscosity, while the first embodiment is more suitable for materials having a higher viscosity.

With reference to all of the described embodiments and to all of the figures, the central stem 10, 41 and the distribution body 13, 21 are mechanically separate members, so that the distribution body 13, 21 is removable and replaceable. The distribution body 13, 21 is in fact annular, so that the annular shape can contain the central stem 41 in the hole 25 of the ring.

The lower part 41 of the central stem 10, 41 has, in the first embodiment, with reference to Figures 8 and 9, two upper openings 30 and 31 and two lower openings 22 and 33 for feeding the first distribution body 13 and the second distribution body 21, respectively.

With reference to the second embodiment, described in Figures 10 and 11, the stem 41 has an upper opening 34, for feeding the distribution body 13, and a lower opening 35, for feeding the underlying second distribution body 21.

In the third embodiment, described with particular reference to Figure 7, the central stem 41 has a single opening 36 for feeding the single distribution body 13 that is provided.

In this manner, the connection between the central stem 41 and the distribution body 13 and 21 is extremely simple, because the distribution body 13, 21 can be removed simply by sliding it off the central stem 41 in the direction of the outward motion 12 of the extruded tubular component. Likewise, in order to assemble the distribution body 13, 21 the body is inserted along the stem 41 in the opposite direction with respect to the output direction of the extruded thermoplastic tubular component. In this manner, the fact that the central stem 41 is contained in the hole 25 of the distribution body 13, 21 causes the openings 36, 34, 35, 30, 31, 22, 33 for passage between the distribution body and the hole 11 inside the stem 41 to be automatically connected to each other simply by fitting the distribution body 13, 21 around the stem 41. Likewise, the lower part 41 of the central stem 10, 41 can be easily replaced so as to adapt the type and number of openings 36, 34, 35, 30, 31, 22, 33 to the type and number of distribution channels 16, 24, 14, 15, 23, 32. As an alternative, the distribution bodies 13, 21 can be removed together with the lower part of 41, 43 of the stem; in this case, for example, the distribution bodies 13, 21 might be removed from the lower part 41 of the stem 10, 41, after the lower part 41 has been disassembled from the upper part 10.

For removal, there is a member 42 for moving the central stem 10, 41, 43 in the direction 12 of the outward motion of the extruded tubular component, so as to extract the front part 41, 43 of the stem and allow its complete cleaning. Preferably, the movement member 42 is formed by a preferably hydraulic piston.

The distribution body 13 has a channel or a plurality of channels 14, 15, 23, 32, 24, 16 formed in the distribution body 13, 21 on the flat side of the distribution body 13, 21. In all of the figures, the reference numeral 40 designates the flat non-machined side of the distribution body 13, 21. Clearly, during the machining of the channels 14, 15, 23, 32, 24, 16 of the tubular body 13, 21 it is sufficient to rest the distribution body in a fixed position on the opposite flat side and machine it with a particularly simple machine tool with two movement axes. In particular, it is not necessary to turn the distribution body 13, 21.

In this manner, very important advantages can be obtained, because the complex machining, once necessary in order to provide the devices according to the prior art, is not required with the present invention. The distribution body 13, 21, owing to its shape, and to the type of simplified machining that is required to form the channels 14, 15, 23, 32, 24, 16, has a greatly reduced manufacturing cost with respect to the channels that were used according to the prior art, which had to be machined on a four-axis machine tool by rotating the part and with much larger parts for an equal extruded tubular component. The distribution body 13, 21 according to the invention is therefore far cheaper.

The problems of stagnation of thermoplastic material during production, with the possibility of breakdown, have also been solved because the paths of the material are simplified.

The length of the head required to form the distribution channels is very small, because the annular distribution body 13, 21 has a very low thickness and therefore the axial length of the stem 10, 41 can be reduced correspondingly, thus providing a shorter, more rigid and therefore more precise head.

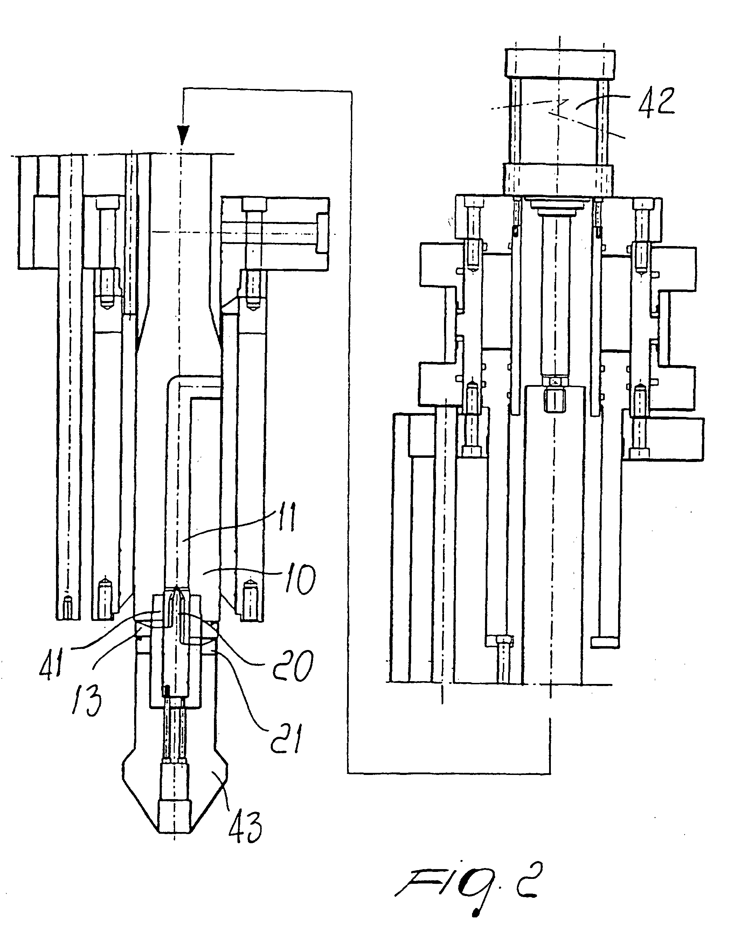

By using the hydraulic cylinder 42, it is possible to provide a faster disassembly of the lower part of the head, as shown with particular reference to Figure 2, and it is possible to access the distribution bodies 13, 21 and the lower part 41 of the stem 10, 41, in order to clean them, after a single disassembly operation; this evidently was not possible according to the prior art, and allows to considerably reduce the time required for color changing and material changing. Furthermore, by disassembling the lower part of the head according to Figure 2, it is possible not only to clean the distribution bodies but also to change the distribution bodies 13, 21 and the lower part 41 of the stem so as to adapt them to another material; in particular, the shape of the channel 14, 15, 23, 32, 24, 16 can be machined differently according to the specific characteristics of the thermoplastic material to be extruded. In particular, the distribution bodies and optionally the lower part 41 of the stem, which must be replaced, do not require movable couplings of the cylindrical type as required by the prior art, and therefore can be made of ordinary steel, with a further cost reduction. It is therefore perfectly possible for the user to have a stock of different distribution bodies 13, 21 and lower parts 41 of the stem, so as to adapt them to any current or future requirement.

Furthermore, in the case of thermoplastic materials that destroy the surfaces of the channels by gripping to the metal, the low cost of the distribution bodies 13, 21 and possibly of the lower part 41 of the stem, according to the invention, allows to replace the bodies easily when they are damaged without having to change the entire head.

The stream divider 20 can be easily adapted to compensate for various successive paths which again depend on the viscosity and inherent characteristics of the thermoplastic material to be extruded, simplifying the adaptation work in this case as well. The linear structure of the device, which is entirely arranged axially in the direction in which the thermoplastic material is extruded, causes the various paths to tend to be more similar to each other than in the known art, so as to achieve better uniformity of the stream.

The device and the method according to the invention are susceptible of numerous modifications and advantages, within the scope of the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A device for extruding, and subsequently blow-molding thermoplastic tubular components by means of an extrusion head, comprising a central stem (10, 41) which is perforated in the direction (12) of the outward movement of the extruded tubular component and forms a central inlet (11) for the single stream of melted thermoplastic material, a distribution body (13, 21) which lies radially, with respect to said central stem (41), so as to distribute said stream radially, until a tubular component is formed, and an annular extrusion port (17) for forming said extruded tubular component, **characterized in that** it comprises a member (42) for moving said central stem (10, 41) in the direction (12) of the outward motion of the extruded tubular component, so as to extract a front part (41, 43) of said stem.

2. The device according to claim 1, comprising a stream divider (20) which is arranged between said central hole (11) and said distribution body (13), and at least one second distribution body (21), so that said stream divider can divide said single stream into at least two parts, said stream divider (20) being orientated in said direction (12) of the outward motion of said extruded tubular component, said stream divider feeding separately said at least two distribution bodies (13, 21).

3. The device according to at least one of the preceding claims, wherein said stream divider (20) has four dividing channels for dividing said single stream into four parts and feeding two separate distribution bodies (13, 21), each of which has two distribution channels (14, 15 and 23, 32).

4. The device according to at least one of the preceding claims, wherein said central stem (10, 41) and said distribution body (13, 21) are mechanically separate members, so that said distribution body is removable and replaceable.

5. The device according to at least one of the preceding claims, wherein said distribution body (13, 21) has an annular shape, so as to contain said central stem (41) in the hole (25) of said annular shape.

6. The device according to at least one of the preceding claims, wherein said distribution body (13, 21) is removable.

7. The device according to at least one of the preceding claims, comprising two distribution bodies (13, 21) which are arranged in succession in the direction (12) of said outward movement of the extruded tubular component.

8. The device according to at least one of the preceding claims, wherein said distribution body (13, 21) has distribution channel or channels (14, 15, 23, 32, 24 and 16), formed on the flat side (40) of said distribution body.

9. The device according to at least one of the preceding claims, wherein a lower part (41) of said central stem (10, 41) is removable from the upper part (10); said lower part (41) having an opening (22, 33, 30, 31, 34, 35, 36) for each one of said distribution channels (32, 23, 15, 14, 16, 24, 16).

10. The device according to at least one of the preceding claims, in which said movement member (42) comprises a hydraulic piston.

## Patentansprüche

1. Vorrichtung zum Extrudieren und nachfolgenden Blasformen thermoplastischer rohrförmiger Komponenten mittels eines Extrusionskopfes, welche einen in Richtung der Auswärtsbewegung (12) der extrudierten rohrförmigen Komponente gelochten und einen für den Einzelstrom des geschmolzenen thermoplastischen Materials zentralen Einlaß (11) ausbildenden zentralen Schaft, einen bezüglich dieses zentralen Schaftes (41) sich radial erstreckenden Verteilungskörper (13, 21) zum radialen Verteilen des Stroms bis eine rohrförmige Komponente ausgebildet ist, und einen ringförmigen Extrusionsauslaß (17) zum Bilden der extrudierten rohrförmigen Komponente aufweist, **dadurch gekennzeichnet, daß** sie ein Bauelement (42) aufweist, um den zentralen Schaft (10, 41) in Richtung der Auswärtsbewegung (12) der extrudierten rohrförmigen Komponente zu bewegen, um so einen vorderen Bereich (41, 43) des Schaftes auszuscheiden.

2. Vorrichtung nach Anspruch 1, welche einen Stromteiler (20), welcher zwischen der zentralen Öffnung (11) und dem Verteilungskörper (13) angebracht ist, und wenigstens einen zweiten Verteilungskörper (21) aufweist, so daß der Stromteiler den Einzelstrom in wenigstens zwei Teile aufteilen kann, wobei der Stromteiler in Richtung der Auswärtsbewegung (12) der rohrförmigen extrudierten Komponente orientiert ist und die wenigstens zwei Verteilungskörper (13, 21) einzeln beschickt.

3. Vorrichtung nach wenigstens einem der vorhergehenden Ansprüche, **dadurch gekennzeichnet, daß** der Stromteiler (20) vier Aufteilungskanäle zum Aufteilen des Einzelstroms in vier Teile aufweist, um den Einzelstrom in vier Teile aufzuteilen und zwei einzelnen Verteilungskörpern (13, 21) zuzuführen, von denen jeder zwei Verteilungskanäle (14, 15 und 23, 32) aufweist.

4. Vorrichtung nach wenigstens einem der vorhergehenden Ansprüche, **dadurch gekennzeichnet, daß** der zentrale Schaft (10, 41) und der Verteilungskörper (13, 21) mechanisch voneinander getrennte Bauelemente sind, so daß der Verteilungskörper entfernbar und wiederplatzierbar ist.

5. Vorrichtung nach wenigstens einem der vorhergehenden Ansprüche, **dadurch gekennzeichnet, daß** der Verteilungskörper (13, 21) eine ringförmige Gestalt aufweist, um auf diese Weise den zentralen Schaft (41) in der Öffnung (25) der ringförmigen Gestalt aufzunehmen.

6. Vorrichtung nach wenigstens einem der vorhergehenden Ansprüche, **dadurch gekennzeichnet, daß** der Verteilungskörper (13, 21) entfernbar ist.

7. Vorrichtung nach wenigstens einem der vorhergehenden Ansprüche, welche zwei Verteilungskörper (13, 21) aufweist, die aufeinanderfolgend in Richtung der Auswärtsbewegung (12) der extrudierten rohrförmigen Komponente angebracht sind.

8. Vorrichtung nach wenigstens einem der vorhergehenden Ansprüche, **dadurch gekennzeichnet, daß** der Verteilungskörper (13, 21) einen Verteilungskanal oder -kanäle (14, 15, 23, 32, 24 und 16) aufweist, welche an der flachen Seite (40) des Verteilungskörpers ausgebildet sind.

9. Vorrichtung nach wenigstens einem der vorhergehenden Ansprüche, **dadurch gekennzeichnet, daß** ein unterer Bereich (41) des zentralen Schaftes (10, 41) von dem oberen Bereich (10) entfernbar ist, wobei der untere Bereich (41) eine Öffnung (22, 33, 30, 31, 34, 35, 36) für jeden der Verteilungskanäle (32, 23, 15, 14, 16, 24, 16) aufweist.

10. Vorrichtung nach wenigstens einem der vorhergehenden Ansprüche, in welcher das Bewegungselement (42) einen hydraulischen Kolben aufweist.

## Revendications

1. Dispositif pour extruder et par la suite mouler par soufflage des composants tubulaires en matière thermoplastique par l'intermédiaire d'une tête d'extrudeuse, comportant une tige centrale (10, 41) qui est perforée dans la direction (12) du mouvement vers l'extérieur du composant tubulaire extrudé et forme une entrée centrale (11) destinée au flux unique de matière thermoplastique fondue, un corps de distribution (13, 21) qui est agencé de manière radiale par rapport à ladite tige centrale (41) de manière à distribuer radialement ledit flux jusqu'à ce qu'un composant tubulaire soit formé, et un orifice d'extrusion annulaire (17) pour former ledit composant tubulaire extrudé, **caractérisé en ce qu'**il comporte un élément (42) pour déplacer ladite tige centrale (10, 41) dans la direction (12) du mouvement vers l'extérieur du composant tubulaire extrudé, de manière à extraire une partie frontale (41, 43) de ladite tige.

2. Dispositif selon la revendication 1, comportant un diviseur de flux (20) qui est agencé entre ledit trou central (11) et ledit corps de distribution (13) et au moins un second corps de distribution (21), de sorte que ledit diviseur de flux peut diviser ledit flux unique en au moins deux parties, ledit diviseur de flux (20) étant orienté dans ladite direction (12) du mouvement vers l'extérieur dudit composant tubulaire extrudé, ledit diviseur de flux alimentant séparément lesdits au moins deux corps de distribution (13, 21).

3. Dispositif selon au moins l'une des revendications précédentes, dans lequel ledit diviseur de flux (20) comporte quatre conduits de division pour diviser ledit flux unique en quatre parties et alimenter deux corps de distribution séparés (13, 21), chacun d'entre eux ayant deux conduits de distribution (14, 15 et 23, 32).

4. Dispositif selon au moins l'une des revendications précédentes, dans lequel ladite tige centrale (10, 41) et ledit corps de distribution (13, 21) sont des éléments mécaniquement séparés, de sorte que ledit corps de distribution peut être enlevé et remplacé.

5. Dispositif selon au moins l'une des revendications précédentes, dans lequel ledit corps de distribution (13, 21) a une forme annulaire de manière à contenir ladite tige centrale (41) dans le trou (25) de ladite forme annulaire.

6. Dispositif selon au moins l'une des revendications précédentes, dans lequel ledit corps de distribution (13, 21) est amovible.

7. Dispositif selon au moins l'une des revendications précédentes, comportant deux corps de distribution (13, 21) qui sont agencés l'un après l'autre dans la direction (12) dudit mouvement vers l'extérieur du composant tubulaire extrudé.

8. Dispositif selon au moins l'une des revendications précédentes, dans lequel ledit corps de distribution (13, 21) a un ou plusieurs conduits de distribution (14, 15, 23, 32, 24 et 16) formés sur le côté plat (40) dudit corps de distribution.

9. Dispositif selon au moins l'une des revendications précédentes, dans lequel une partie inférieure (41) de ladite tige centrale (10, 41) est amovible par rapport à la partie supérieure (10), ladite partie inférieure (41) ayant une ouverture (22, 33, 30, 31, 34, 35, 36) pour chacun desdits conduits de distribution (32, 23, 15, 14, 16, 24, 16).

10. Dispositif selon au moins l'une des revendications précédentes, dans lequel ledit élément de déplacement (42) comporte un piston hydraulique.
